# FASCICULE DE BREVET EUROPEEN

(11) **EP 4 670 361 B1**
(45) Date de publication et mention de la délivrance du brevet: **28.10.2026**
(21) Numéro de dépôt: 24709814.8
(22) Date de dépôt: 19.02.2024
(51) Int. Cl.: H04N 23/74, H04N 23/56, H04N 23/73, G01N 15/02, G02B 21/00, G01N 15/14, G01N 15/1433, G01N 15/1434, G01N 15/10

(54) **DISPOSITIF D'IMAGERIE POUR MESURER LA DYNAMIQUE D'UN ÉCHANTILLON ET PROCÉDÉ ASSOCIÉ**
BILDGEBUNGSVORRICHTUNG ZUR MESSUNG DER DYNAMIK EINER PROBE UND ZUGEHÖRIGES VERFAHREN
IMAGING DEVICE FOR MEASURING THE DYNAMICS OF A SAMPLE AND ASSOCIATED METHOD

(30) Priorité: 20.02.2023 FR 2301561
(43) Date de publication de la demande: 31.12.2025
(73) Titulaire: Université de Rennes, 35700 Rennes (FR); Centre National de la Recherche Scientifique, 75016 Paris (FR)
(72) Inventeur: SCHAUB, Emmanuel, 35510 Cesson-Sévigné (FR)
(74) Mandataire: Plasseraud IP
(86) Numéro de dépôt international: PCT/FR2024/050213
(87) Numéro de publication internationale: WO 2024/175852

(56) Documents cités:
- US-A1- 2017 074 768
- YOU RUILIN ET AL: "Two-color differential dynamic microscopy for capturing fast dynamics", REVIEW OF SCIENTIFIC INSTRUMENTS, AMERICAN INSTITUTE OF PHYSICS, 2 HUNTINGTON QUADRANGLE, MELVILLE, NY 11747, vol. 92, no. 2, 10 February 2021 (2021-02-10), XP012253766, ISSN: 0034-6748, [retrieved on 20210210], DOI: 10.1063/5.0039177

## Description

### Domaine technique

La présente divulgation concerne un dispositif d'imagerie pour mesurer la dynamique des entités en mouvement d'un échantillon à partir d'une analyse différentielle d'une série d'images chronologiques. La présente invention concerne également un procédé d'imagerie permettant d'acquérir des images par une caméra standard et permettant d'effectuer une analyse différentielle pour mesurer la dynamique des entités en mouvement dont la dynamique est supérieure à la fréquence d'acquisition d'images de la caméra utilisée.

### Technique antérieure

La caractérisation de la dynamique d'un système dynamique peut être réalisée à l'aide d'une microscopie dynamique différentielle ou DDM (acronyme anglais pour Differential Dynamic Microscopy). Cette technique optique est particulièrement adaptée pour étudier la dynamique d'un gel ou un liquide composé de particules ou de nanoparticules, ou un milieu biologique composé de bactéries. Cette technique consiste à acquérir une série d'images d'un système dynamique à différents instants avec une caméra. Ensuite, des images de différence sont obtenues en soustrayant deux images acquises à des moments différents. Les images de différence sont analysées dans l'espace de Fourier pour extraire des informations sur la dynamique des particules en mouvement. Cependant, cette technique est limitée par la fréquence d'acquisition d'images de la caméra utilisée. Ainsi, il est impossible de caractériser des phénomènes dynamiques se produisant sur une période plus courte que l'intervalle de temps entre les images de la caméra.

Pour s'affranchir de cette contrainte, une solution connue consiste à éclairer l'échantillon avec des impulsions lumineuses et d'acquérir une série d'images avec une caméra standard. Les impulsions lumineuses sont émises par une diode ou plusieurs diodes électroluminescentes ou LED. La caméra et la LED sont synchronisées de sorte que l'impulsion lumineuse soit émise pendant le temps d'acquisition d'image de la caméra. Les courts délais des impulsions permettent de mesurer les phénomènes dynamiques se produisant plus rapidement que la fréquence d'acquisition d'images de la caméra.

DE102009029321 décrit un dispositif et un procédé permettant d'enregistrer une série d'images dans le temps pour caractériser un objet mobile. Le dispositif comprend une caméra de couleur et trois diodes électroluminescentes (LEDs) qui émettent une impulsion lumineuse de longueurs d'onde différentes pour éclairer l'objet mobile à différents instants. Ainsi, les trois LEDs et la caméra sont synchronisées pour enregistrer trois images de l'objet mobile à trois instants différents pendant le temps d'acquisition de la caméra.

DE102009020876 décrit un dispositif et un procédé d'acquisition d'images pour caractériser un flux de particules. Le dispositif comprend une caméra et une diode électroluminescente. La caméra et la LED sont synchronisées pour enregistrer au moins deux images pendant le temps d'acquisition de la caméra.

Ces solutions existantes permettent de mesurer des dynamiques rapides en utilisant une caméra standard. Cependant, elles ne permettent pas d'obtenir un nombre important de données et ne sont donc pas entièrement satisfaisantes en termes de résolution temporelle lorsque la dynamique se produit sur une échelle de temps relativement importante, souvent sur plusieurs ordres de grandeurs.

Le document "Two-color differential dynamic microscopic for capturing fast dynamics" publié dans la revue: "Review of Scientific Instruments, 2021-02-10, American Institute of Physics" divulgue une extension de la microscopie dynamique différentielle (DDM) utilisant une illumination séquentielle à deux couleurs (bleu puis rouge) et une caméra couleur. En séparant les impulsions lumineuses par un délai inférieur au temps d'exposition de la caméra, la méthode « two-color DDM » permet de capturer des dynamiques plus rapides que la fréquence d'acquisition habituelle.

Le document US2017074768A1 divulgue un dispositif polyvalent de caractérisation de particules permettant d'estimer taille et forme d'abord par analyse d'images différentielles puis par analyse des variations temporelles entre images (DDM).

La présente divulgation propose un procédé et un dispositif d'imagerie, simple, rapide et peu onéreuse, qui permet de générer un ensemble d'images pour une analyse différentielle des images, avec une séquence de mesure courte tout en ayant une résolution temporelle élevée pour pourvoir étudier des phénomènes qui se produisent sur une échelle de temps de plusieurs ordres de grandeurs.

### Résumé

La présente divulgation vient améliorer la situation.

Selon un aspect de la présente divulgation, il est proposé un dispositif d'imagerie pour mesurer la dynamique d'un échantillon comprenant des entités en mouvement, selon la revendication 1.

Les caractéristiques exposées dans les paragraphes suivants peuvent, optionnellement, être mises en œuvre, indépendamment les unes des autres ou en combinaison les unes avec les autres.

La séquence d'impulsions lumineuses comprend M paires d'impulsions, où M est un nombre entier.

La séquence d'impulsions lumineuses comprend 2M-1 d'impulsions, où M est un nombre entier.

Lees impulsions paires de la séquence sont émises à la fin de chaque temps d'exposition de la caméra.

Les impulsions paires de la séquence sont émises au début de chaque temps d'exposition de la caméra.

La première suite croissante S1 est une suite géométrique, une suite arithmétique ou une suite arithmético-géométrique.

Selon un mode de réalisation, l'unité de constructions d'images est configurée pour calculer une fonction de structure de l'échantillon à partir des différences déterminées pour chaque paire d'images dudit second ensemble d'images et extraire les informations représentatives de la dynamique des entités en mouvement.

De préférence, la source lumineuse pulsée est une diode électroluminescente.

Selon une variante, la source lumineuse pulsée est une source laser.

Selon un autre aspect de la présente divulgation, il est proposée un procédé d'imagerie pour mesurer la dynamique d'un échantillon comprenant des entités en mouvement, selon la revendication 10.

Les caractéristiques exposées dans les paragraphes suivants peuvent, optionnellement, être mises en œuvre, indépendamment les unes des autres ou en combinaison les unes avec les autres.

Les impulsions paires de la séquence sont émises à la fin de chaque temps d'exposition de la caméra.

Les impulsions paires de la séquence sont émises au début du temps d'exposition de la caméra.

La première suite est une suite croissante géométrique, arithmétique ou arithmético-géométrique.

Selon un mode de réalisation, le procédé comprend en outre une étape :
- calculer (E5) une fonction de structure de l'échantillon dynamique à partir des différences pour chaque paire d'images dudit second ensemble d'images construit à l'étape (E4) et extraire les informations représentatives de la dynamique des entités en mouvement de l'échantillon.

### Brève description des dessins

D'autres caractéristiques, détails et avantages apparaîtront à la lecture de la description détaillée ci-après, et à l'analyse des dessins annexés, sur lesquels :
**Fig. 1**

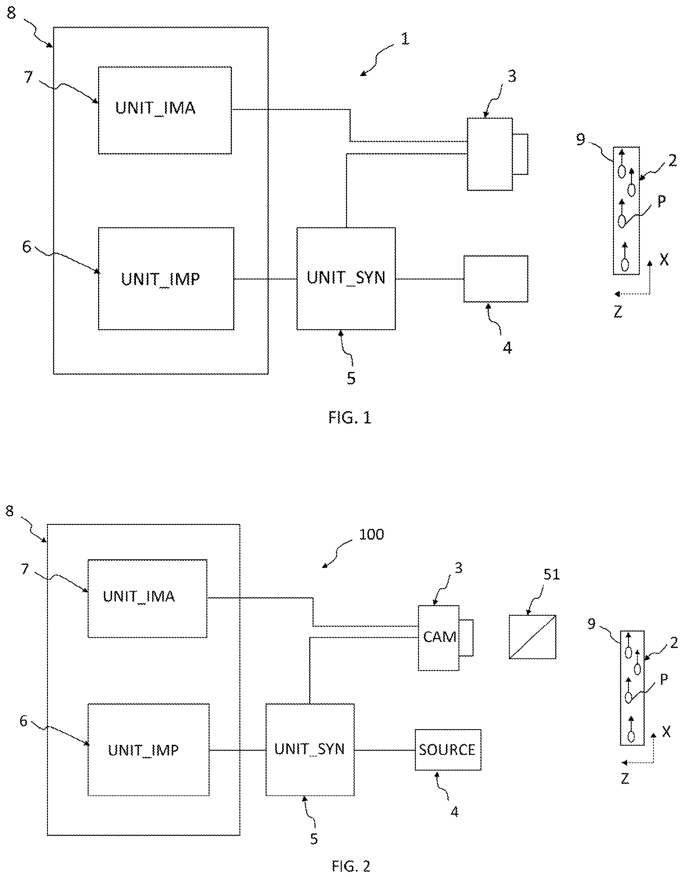

   [Fig. 1] La figure 1 est une vue schématique du dispositif d'imagerie selon un mode de réalisation fonctionnant dans une configuration en réflexion dans laquelle une succession d'impulsions lumineuses sont envoyées par une source lumineuse pulsée pour venir éclairer un échantillon et la surface de l'échantillon éclairée réfléchit les impulsions lumineuses en direction de l'objectif de la caméra.
**Fig.2**
   [Fig. 2] La figure 2 est une vue schématique d'une variante du dispositif d'imagerie de la figure 1 dans une configuration d'imagerie en réflexion à travers un séparateur positionné entre la caméra et la surface éclairée.
**Fig.3**

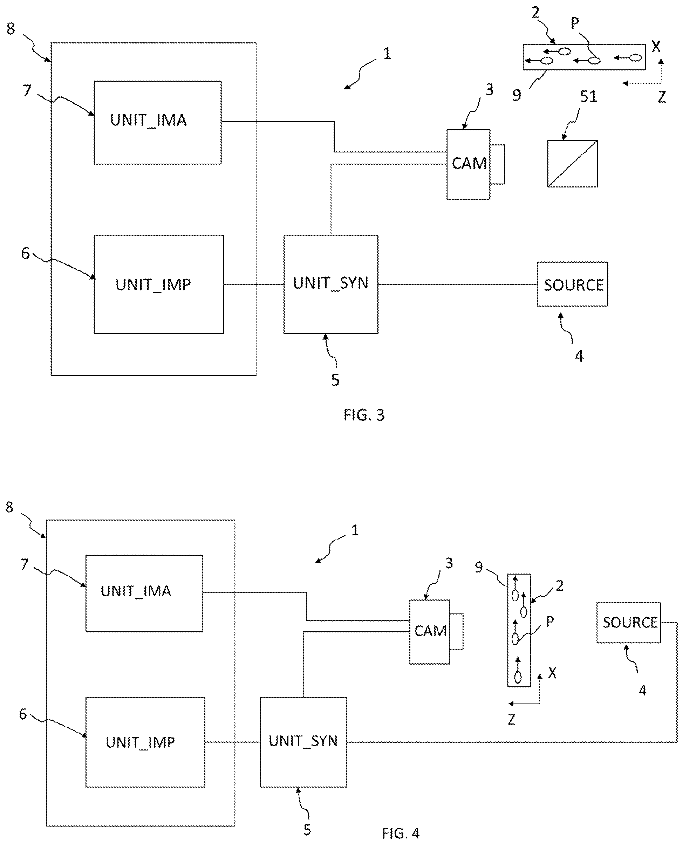

   [Fig. 3] La figure 3 est une vue schématique d'une autre variante du dispositif d'imagerie de la figure 1 dans une configuration d'imagerie en réflexion à travers un séparateur positionné sur le chemin optique entre la source pulsée et l'échantillon et sur le chemin optique entre la caméra et l'échantillon.
**Fig.4**
   [Fig. 4] La figure 4 est une vue schématique du dispositif d'imagerie selon un mode de réalisation fonctionnant dans une configuration d'imagerie en transmission dans laquelle les impulsions sont envoyées par une source lumineuse pulsée pour venir éclairer un échantillon et sont transmises par l'échantillon en direction de l'objectif de la caméra.
**Fig.5**

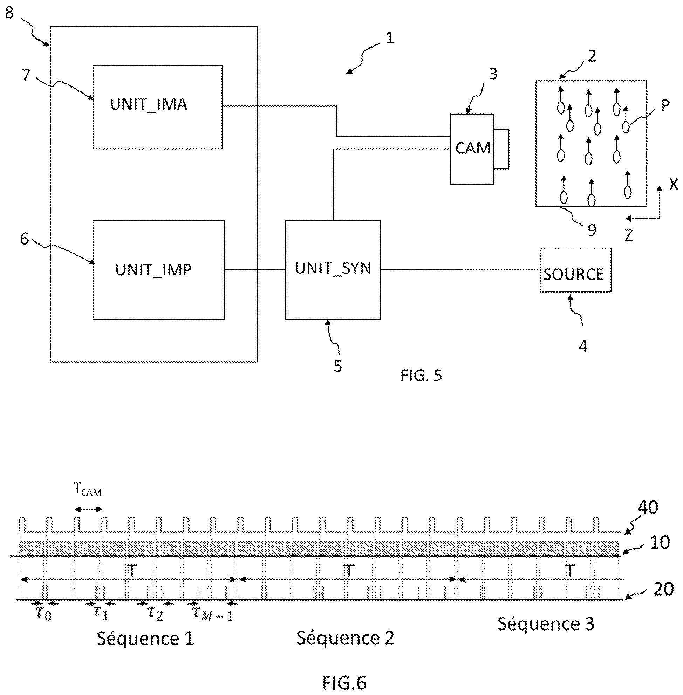

   [Fig. 5] La figure 5 est une vue schématique du dispositif d'imagerie selon un mode de réalisation fonctionnant dans une configuration d'imagerie à 90 degrés dans laquelle les impulsions lumineuses viennent éclairer une tranche de l'échantillon pour obtenir un effet de sectionnement optique.
**Fig. 6**
   [Fig. 6] La figure 6 représente un exemple d'une séquence d'émissions d'impulsions lumineuse d'une durée T, répétée trois fois et synchronisées aux temps d'exposition d'une caméra, la séquence étant constituée de M paires d'impulsions lumineuses, M étant un nombre entier.
**Fig. 7**

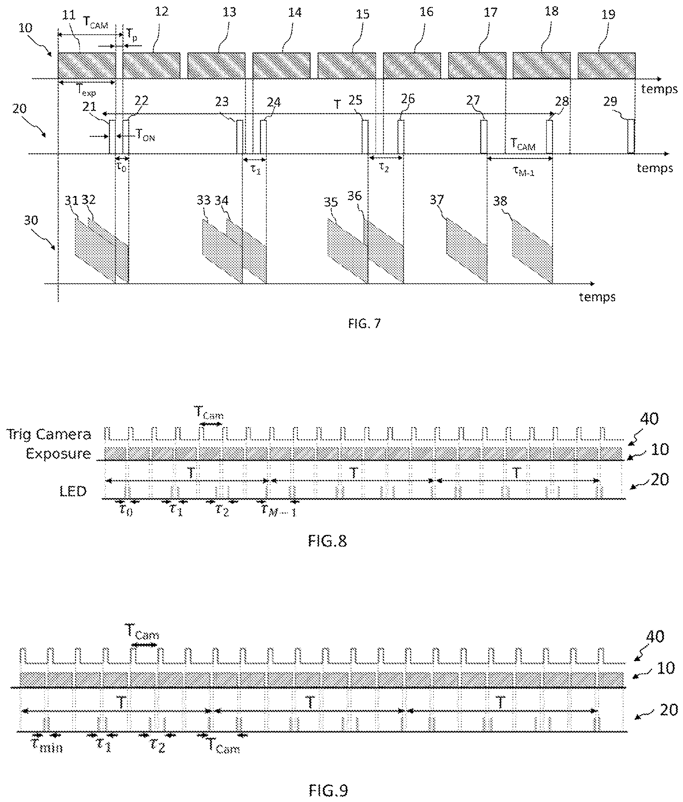

   [Fig. 7] La figure 7 représente une vue agrandie d'une séquence d'impulsions lumineuses de la figure 6.
**Fig. 8**
   [Fig. 8] La figure 8 représente un deuxième exemple d'une séquence d'émissions d'impulsions lumineuse répétée trois fois et synchronisées aux temps d'exposition d'une caméra, la séquence étant constituée de 2M-1 d'impulsions lumineuses, M étant un nombre entier.
**Fig. 9**
   [Fig. 9] La figure 9 représente la séquence temporelle de la figure 8, avec l'écart temporel minimum de la séquence τ₀ = τₘᵢₙ = T_{P} + T_{ON} et l'écart temporel de la (M-1)^{ième} paire d'impulsions de la séquence τ_{M-1} = τₘₐₓ = T_{CAM} qui est le temps de prise d'image de la caméra.
**Fig. 10**

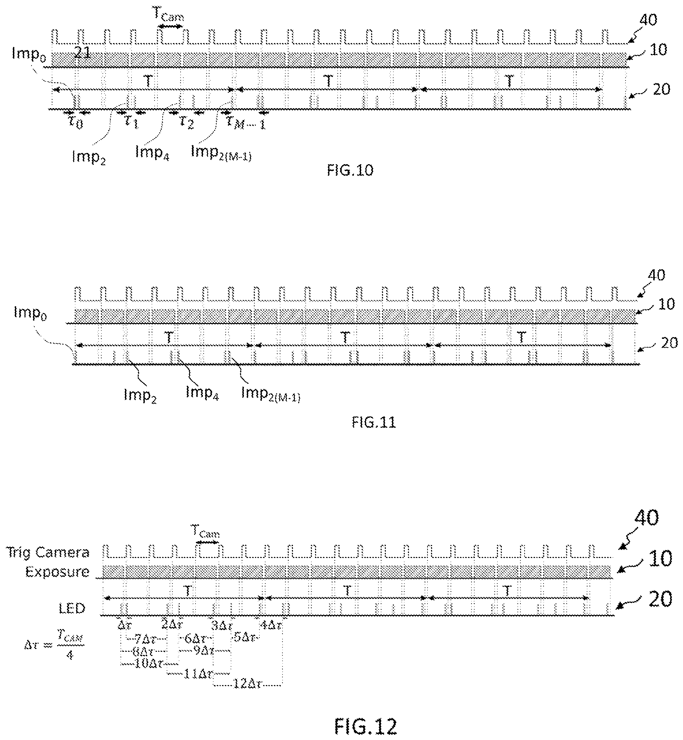

   [Fig. 10] La figure 10 représente un exemple de séquence dans lequel les impulsions portant un numéro paire notées Iᵢₘₚ₀, Iᵢₘₚ₂, I_{imp2(M-1)} sont émise toujours à la fin du temps d'exposition de l'image de la caméra.
**Fig. 11**
   [Fig. 11] La figure 11 représente un exemple de séquence dans lequel les impulsions portant numéro paire notées Iᵢₘₚ₀, Iᵢₘₚ₂, I_{imp2(M-1)} sont émise toujours au début du temps d'exposition de l'image de la caméra.
**Fig. 12**
   [Fig. 12] La figure 12 représente un exemple de séquence dans lequel l'écart temporel minimum *τ*₀ = Δ*τ* ≥ *τ*ₘᵢₙ, avec Δτ un sous-multiple de T_{CAM} (T_{CAM} = 4 Δτ) et un exemple de construction du second ensemble de paires d'image à partir des images générées à partir de cette séquence d'impulsions.
**Fig. 13**

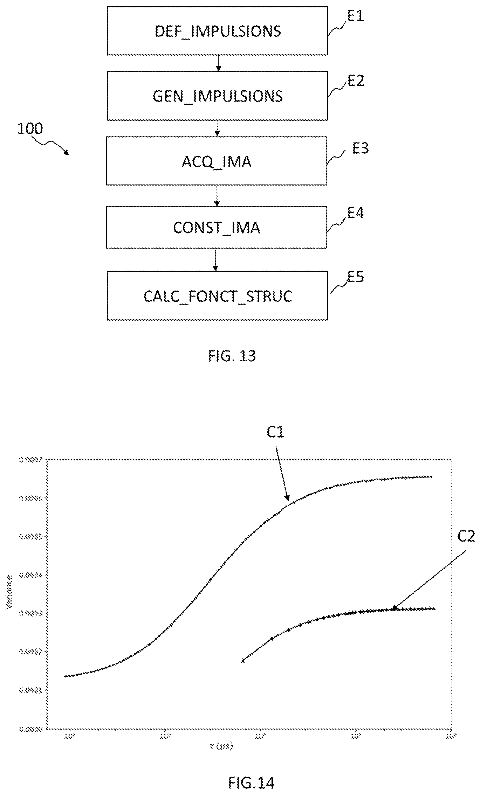

   [Fig.3] La figure 13 est un diagramme des principales étapes du procédé d'imagerie pour mesurer la dynamique d'un échantillon selon un mode de réalisation.
**Fig. 14**
   [Fig. 14] La figure 14 montre une courbe C1 représentant la variance de la différence entre deux images séparées d'une durée τ obtenue avec des impulsions lumineuses émises avec des écarts temporels définis selon une suite géométrique et une courbe référencée C2 représentant la variance de la différence entre deux images obtenues avec un éclairage continu.

### Description des modes de réalisation

Il est maintenant fait référence à la figure 1 qui illustre un dispositif d'imagerie 1 pour mesurer la dynamique d'un échantillon 2 selon un mode de réalisation.

Un échantillon peut être par exemple un milieu comportant des entités ou particules (P) de taille micrométrique ou nanométrique mobiles. Les particules peuvent être par exemple des cellules mobiles dans un milieu biologique.

Le dispositif de la figure 1 permet d'acquérir un ensemble d'images qui sont ensuite combinées par paires pour réaliser des analyses par paires d'images. Les images sont générées en synchronisant les instants d'émission des impulsions lumineuses avec les temps de prise d'image d'une caméra standard de sorte que d'une part l'impulsion soit émise à un instant déterminé dans le temps d'exposition de la caméra, et d'autre part qu'une seule impulsion soit émise par temps d'exposition de la caméra.

Une paire d'images est caractérisée par un écart temporel τ qui sépare deux images. Ce temps est déterminé par l'écart temporel qui sépare deux impulsions lumineuses. Le principe de la microscopie dynamique différentielle ou DDM (acronyme anglais de Dynamic Differential Microscopy) est utilisé pour déterminer la fonction de structure en prenant la transformée de Fourier de la différence entre deux images de chaque paire d'images en fonction de l'écart temporel pour extraire les informations sur la dynamique des particules du système. En fonction du système étudié, il est donc souhaitable de disposer d'un ensemble de paires d'images dont les écarts temporels forment une suite croissante la plus adaptée à l'échelle de temps sur laquelle fluctuent les phénomènes dynamiques, tels que les phénomènes diffusifs, pour obtenir une résolution temporelle élevée tout ayant une séquence de mesure la plus courte possible. C'est la suite désirée S1 qui peut être une suite géométrique, une suite arithmétique ou une suite arithmético-géométrique.

Le dispositif et le procédé de la présente divulgation ont donc pour but de définir des séquences d'impulsions lumineuses qui permettent de générer un premier ensemble d'images à partir duquel il est possible de construire un second ensemble de combinaisons de paires d'images pour des multiples d'écarts temporels τ différents qui forment une seconde suite S2 croissante ayant sensiblement la même forme que la suite désirée S1. En d'autres termes, en définissant préalablement le motif des impulsions d'une séquence d'impulsions par rapport aux temps d'exposition de la caméra, le dispositif et le procédé de la présente divulgation permettent de générer un ensemble de paires d'images dont les écarts temporels forment une suite croissante adaptée à l'échelle de temps sur laquelle fluctue les phénomènes dynamiques. Le motif de la séquence d'impulsions est défini de manière à obtenir une séquence T la plus courte possible. En outre, cette séquence d'impulsions doit être définie de sorte que les premiers écarts temporels des paires d'images construites de la seconde suite S2 soient des valeurs exactes par rapport à la première suite S1 désirée.

Dans la présente divulgation, on comprendra par les termes « même forme » que la forme de la suite S2 suit sensiblement la même suite croissante S1 ou sensiblement la même suite géométrique S1. Par les termes « sensiblement », on comprendra que les écarts temporels de la suite S2 peuvent différer de ceux de la suite S1 d'un différentiel négligeable. Par exemple, un différentiel négligeable est un différentiel inférieur d'un ordre de grandeur à la valeur de l'écart temporel concerné. Par ailleurs, pour les premiers écarts temporels de la suite S2, leurs valeurs sont exactes par rapport à la première suite S1 désirée.

Le dispositif 1 comprend une caméra 3 pour acquérir les images, une source lumineuse pulsée 4 apte à générer des impulsions lumineuses pour éclairer une zone de mesure de l'échantillon 2, une unité de synchronisation 5 (UNIT_SYN) pour synchroniser la caméra 3 avec la source lumineuse 4, une unité de définition de séquences temporelles d'impulsions 6 (UNIT_IMP) et une unité de construction d'un ensemble de paires d'images 7 (UNIT_IMA) pour le calcul de la fonction de structure.

Selon un exemple de réalisation, l'unité de définition de séquences d'impulsions 6 et l'unité de construction de paires d'images 7 sont intégrées dans une unité de calcul centrale commune 8 comme l'illustre la figure 1. L'unité de calcul centrale 8 peut comprend également une interface d'affichage et une mémoire de stockage.

Selon un autre exemple de réalisation, l'unité de définition de séquencées d'impulsions 6 et l'unité de construction de paires d'images 7 sont deux entités physiques distinctes.

Le dispositif d'imagerie de la figure 1 est dans une configuration de fonctionnement en réflexion. Les impulsions lumineuses sont émises successivement selon une séquence temporelle par la source lumineuse pulsée 4 pour venir éclairer une surface de l'échantillon que l'on souhaite imager. Le faisceau lumineux formé par réflexion des impulsions lumineuses d'éclairage sur la surface de l'échantillon est dirigé en direction de l'objectif de la caméra 3. La caméra 3 est disposée du même côté de la source 4, par rapport à la surface éclairée de l'échantillon. Cette configuration permet d'imager la surface de l'échantillon en réflexion.

La figure 2 illustre une variante de réalisation différente de celle décrite dans ce qui précédé, par le fait que le dispositif d'imagerie 100 comprend un élément séparateur 51 disposé entre la caméra 3 et la surface à imager de l'échantillon 2. En d'autres termes, l'élément séparateur 51 est positionné sur le chemin optique d'imagerie. Par conséquent, l'élément séparateur est traversé par le faisceau lumineux formé par réflexion des impulsions lumineuses d'éclairage sur la surface de l'échantillon avant d'être dirigé en direction de l'objectif de la caméra 3.

La figure 3 illustre une autre variante de réalisation différence de celle de la figure 2, par le fait que l'élément séparateur 51 est positionné entre la source d'éclairage 4 et l'échantillon 2 et la caméra 3 et l'échantillon 2. En d'autres termes, l'élément séparateur 51 est positionné sur le chemin optique d'imagerie et sur le chemin optique d'éclairage. Par conséquent, l'élément séparateur 51 est traversé par le faisceau lumineux formé par les impulsions lumineuses envoyées par la source pulsée d'éclairage pour venir éclairer une zone de la surface de l'échantillon et par le faisceau lumineux formé par réflexion des impulsions lumineuses d'éclairage sur la surface 9 de l'échantillon avant d'être dirigé en direction de l'objectif de la caméra.

Les configurations illustrées sur les figures 1, 2 et 3 permettent d'imager une zone de la surface 9 de l'échantillon en réflexion.

La figure 4 illustre une autre variante de réalisation différente de celle de la figure 1, par le fait que la source d'éclairage 4 et la caméra 3 sont disposées de part et d'autre de l'échantillon 2. La source d'éclairage 4 est sensiblement colinéaire avec le faisceau d'imagerie, mais disposée du côté opposé de l'échantillon. Ce mode d'éclairage permet d'imager une zone de l'échantillon avec un mode en transmission, et non pas en réflexion, donc contrairement aux cas des configurations des figures 1, 2 et 3. Ce mode d'éclairage est intéressant pour la mesure dynamique des particules dans le cas d'échantillons transparents, par exemple des solutions de nanoparticules suffisamment diluées, ou des échantillons peu épais.

La figure 5 illustre encore une autre variante de réalisation différente de celle de la figure 1, par le fait que la source d'éclairage 4 est disposée pour venir éclairer une tranche de l'échantillon. La direction du faisceau d'éclairage est perpendiculaire à la direction du faisceau d'imagerie. Ce mode d'éclairage à 90 degrés ou mode SPIM (acronyme anglais de Single Plane Illumination Microscopie) permet de n'éclairer qu'une tranche de l'échantillon et donc d'avoir un effet de sectionnement optique.

Selon un mode de réalisation, la caméra 3 utilisée dans le dispositif de la divulgation est une caméra standard qui fonctionne par exemple à une fréquence de prise d'images F_{CAM} comprise entre 10 Hz et 2000 Hz correspondant à un temps de prise d'images TCAM compris entre 0,1 s et 0,5 ms.

Selon un mode de réalisation, la source lumineuse pulsée 4 est apte à émettre un faisceau lumineux sous forme d'impulsions lumineuses courtes. La source lumineuse comporte une diode électroluminescente ou LED (acronyme anglais de Light Emitting Diode). De manière connue, l'alimentation du composant LED est en mode de pilotage en courant pulsé sous forme d'un signal qui comprend une succession d'impulsions électriques. L'intensité du courant injecté est généralement comprise entre 100mA et 100A, et peut être très supérieur au courant nominal de la structure du composant LED. La LED émet des impulsions ayant une durée comprise entre 1 µs et 10 ms. Sur les figures 1 à 5, l'échantillon 2 est placé dans un repère orthonormé fixe (XYZ) et présente une surface 9 qui s'étendant dans le plan (XZ). La source lumineuse est configurée pour venir éclairer une zone cible de mesure de cette surface 9.

Selon un autre mode de réalisation, la source lumineuse 4 pulsée comporte une source laser apte à émettre un faisceau lumineux sous forme d'impulsions courtes ayant une durée comprise entre 1ns et 1ms.

L'unité de synchronisation 5 est configurée pour synchroniser le déclenchement de la caméra 3 et l'émission d'impulsions de la source 4 de sorte que chaque impulsion lumineuse destinée à venir éclairer le système dynamique soit émise pendant le temps d'exposition Tₑₓₚ de la caméra, à un instante prédéterminé. De cette manière, il est possible de prendre une unique image de l'échantillon pendant chaque temps d'exposition de la caméra à un moment déterminé par le moment d'émission de l'impulsion lumineuse. Le temps d'exposition de la caméra Tₑₓₚ étant plus long que la largeur des impulsions T_{ON.}

L'unité de définition de séquences d'impulsions 6 est configurée pour définir une séquence d'impulsions d'une durée T qui est répétée périodiquement pendant toute la durée de la prise d'images de la caméra. Les impulsions de la séquence sont synchronisées par rapport aux temps d'exposition de la caméra de manière à pouvoir générer un ensemble d'images comme l'illustre la figure 7. Cet ensemble d'images est utilisé pour construire un deuxième ensemble de paires d'images dont les écarts temporels entre deux images forment une suite croissante S2 ayant sensiblement la même forme que la première suite S1 désirée par rapport à l'échelle de temps sur laquelle fluctue les phénomènes dynamiques de l'échantillon. Si la première suite S1 est par exemple géométrique, la seconde suite S2 l'est également. Le motif d'une séquence d'impulsions est défini de sorte qu'on puisse trouver des paires d'images telles que les écarts temporels qui séparent les deux impulsions de ces paires forment une suite croissante S2 ayant sensiblement la même forme que la première suite S1 désirée. Le motif de la séquence d'impulsions est défini de manière à obtenir le nombre de paires d'images désiré, tout en minimisant la durée de la séquence de prise d'images correspondante. Les critères de définition de la séquence d'impulsions seront décrits ci-dessous.

L'unité de construction d'images 7 est configurée pour construire le second ensemble de paires d'images pour obtenir une distribution d'écarts temporels adaptée par rapport à l'échelle de temps sur laquelle fluctue le système dynamique, c'est-à-dire une suite croissante S2 ayant la même forme que la suite croissante S1 désirée. De manière générale, les phénomènes dynamiques, tels que la diffusion des particules mobiles dans un milieu liquide, se produisent sur une échelle de temps de plusieurs ordres de grandeurs. Aussi, pour pouvoir étudier ces phénomènes, il est nécessaire de collecter suffisamment de données sur cette échelle de temps.

L'unité de construction d'images 7 est également configurée pour calculer la transformée de Fourier de la différence entre deux images pour chaque paire d'images en fonction de l'écart temporel pour obtenir la fonction de structure du système dynamique. Les informations sur la dynamique des phénomènes dynamiques de l'échantillon sont ensuite extraites à partir de cette fonction de structure.

La figure 6 représente une séquence de déclenchements de la prise d'images 40 de la caméra 3, une séquence de temps d'exposition 10 de la caméra 3 et un exemple de séquence d'impulsions lumineuses 20 émises par la source lumineuse 4. Cette même séquence d'impulsions d'une durée T est répétée ici par exemple trois fois.

La figure 7 est une vue schématique agrandie de la figure 6 représentant uniquement une seule séquence d'impulsions de la figure 6 synchronisée avec la séquence de temps d'exposition de la caméra. La figure 7 montre également une séquence d'images 30 générées par la caméra. Chacune des images est associée à une impulsion lumineuse émise. Sur la figure 7, le temps d'exposition Tₑₓₚ correspond au temps pendant lequel la caméra détecte la lumière. Les temps d'expositions Tₑₓₚ sont séparés par un temps de pause Tₚ pendant lequel la caméra est aveugle. Le temps de pause Tₚ entre deux images correspond donc à la différence entre le temps de prise d'image T_{CAM} et le temps d'exposition Tₑₓₚ.

La caméra 3 et la source 4 sont synchronisées au moyen de l'unité de synchronisation 5 de sorte qu'une seule impulsion lumineuse soit émise par temps d'exposition et chaque impulsion lumineuse est émise à un instant spécifique par rapport aux temps d'exposition selon le motif de la séquence temporelle d'impulsions définie par l'unité de définition de séquences d"impulsions 6. Ces différents instants d'émissions d'impulsions lumineuses correspondent aux instants de prises d'images par la caméra qui génère une séquence temporelle d'images 30. Ainsi, une paire d'images est caractérisée par l'écart temporel qui sépare deux impulsions lumineuses. Toutes les impulsions lumineuses ont la même largeur notée T_{ON} sur la figure 7.

En référence aux figures 6-11, les critères pour définir une séquence d'impulsions lumineuses sont décrits ci-dessous.

La séquence d'impulsions est définie de sorte qu'il y a qu'une seule impulsion lumineuse par temps d'exposition.

De manière générale, les phénomènes dynamiques, tels que la diffusion des particules mobiles dans un milieu aqueux, se produisent sur une échelle de temps de plusieurs ordres de grandeurs. Aussi, pour pouvoir étudier ces phénomènes, il est nécessaire de collecter suffisamment de données sur cette échelle de temps. Il est donc souhaitable de disposer d'un ensemble de paires d'images dont les écarts temporels sont distribués entre un écart temporel minimum qui sépare deux images et un écart temporel maximum qui sépare deux images selon une suite croissante désirée S1.

Selon un mode de réalisation, cette suite désirée peut être une suite géométrique selon la relation suivante :
[Math1] ${τ}_{i + 1} = {ατ}_{i}$

L'écart temporel de la (i+1)^{ieme} paire d'images τᵢ₊₁ est égal à un facteur α de l'écart temporel de la i^{ième} paire d'images, α étant un nombre supérieur à 1.

Selon un autre mode de réalisation, cette suite désirée peut être une suite arithmétique selon la relation suivante :
[Math2] ${τ}_{i + 1} = {τ}_{i} + Δ τ$

La différence entre l'écart temporel de la (i+1)^{ième} paire d'images et la i^{ième} paire d'images est égale à Δτ qui est un nombre positif.

Selon un autre mode de réalisation, cette suite désirée peut être une suite arithmétique-géométrique selon la relation suivante :
[Math3] ${τ}_{i + 1} = {ατ}_{i} + Δτ$

Où α est un nombre supérieur à 1 et Δτ est un nombre positif.

Les séquences d'impulsions étant synchronisées avec la caméra, les critères de définition du motif de la séquence d'impulsions sont également liés aux caractéristiques de la caméra utilisée. Ainsi, afin d'obtenir la meilleure résolution temporelle possible, pour une paire d'images, l'écart temporel le plus petit τₘᵢₙ correspond à la situation où la première impulsion arrive à la fin du temps d'exposition de la première image et la deuxième impulsion arrive au début du temps d'exposition de la seconde image de la paire, soit τₘᵢₙ = T_{ON} + T_{P}.

Selon un mode de réalisation, on choisira l'écart temporel le plus petit τ₀ associé à la première paire d'images égal à τₘᵢₙ = T_{ON} + T_{P}.

On cherche à générer des paires d'images ayant des valeurs d'écarts temporels inférieures ou égales à T_{CAM}. L'écart temporel le plus grand de la suite τ_{M-1} associé à la (M-1)^{ième} paire d'image correspond à un écart inférieur ou égal au temps de prise d'image de la caméra τ_{M-1} ≤ T_{CAM}, où M est un nombre entier.

Selon un mode de réalisation, on choisira τ_{M-1} = T_{CAM}.

Par voie de conséquence, le motif d'une séquence d'impulsion lumineuse est défini de manière à générer des paires d'images séparées par des écarts temporels distribués entre l'écart temporel le plus petit noté τ₀ et l'écart temporel le plus grand noté τ_{M-1}, où M est un entier selon la relation suivante : τ₀ < τ₁ < τ₂ < τ₃ <...< τ_{M-1} avec τₘᵢₙ ≤ τ₀ et τ_{M-1} ≤ T_{CAM} .

Le motif d'une séquence est donc défini par les paramètres suivants : le nombre d'impulsions lumineuses dans une séquence, la durée de la séquence T, l'arrangement d'un ensemble de paires d'impulsions séparées d'un écart temporel τᵢ avec i allant de 0 à M-1 ou de 0 à M-2, où M est un nombre entier. Les impulsions d'une séquence peuvent être générées directement avec les écarts temporels rangés dans un ordre croissant. Les impulsions d'une séquence peuvent également générées avec les écarts temporels rangés dans un ordre décroissant. Les impulsions d'une séquence peuvent également être générées en permutant les paires d'impulsions.

La figure 6 illustre un exemple de séquence d'impulsions lumineuses constituée de M paires d'impulsions et cette séquence peut être répétée périodiquement. Le temps qui sépare deux impulsions d'une même paire est noté τᵢ, avec i allant de 0 à M-1, où M est un nombre entier.

Selon une variante du mode de réalisation de la figure 6, la séquence d'impulsions lumineuses est constitué de M paires d'impulsions identiques à celles de la séquence de la figure 7, avec l'ordre des paires d'impulsions lumineuses permuté de sorte que dans l'ordre temporel, l'écart temporel noté τ_{M-1} devient le premier écart temporel et l'écart temporel noté τ₀ devient le dernier écart temporel de la séquence, en gardant la même forme de suite : τ₀ < τ₁ < τ₂ < τ₃ < ... < τ_{M-1}, avec τₘᵢₙ ≤ τ₀ et τ_{M-1} ≤ T_{CAM} .

La figure 7 représente par exemple une séquence de huit temps d'expositions 10 de la caméra 10 référencés 11, 12, 13, 14, 15, 16, 17, 18, 19. Le temps de prise d'image de la caméra T_{CAM} correspond à la somme du temps d'exposition Tₑₓₚ et du temps de pause T_{P}. Les temps d'expositions sont donc séparés par un temps de pause T_{P}. Une séquence de huit impulsions 21, 22, 23, 24, 25, 26, 27, 28 synchronisée à cette séquence de neuf temps d'exposition est représentée en 20. Les impulsions ont une durée d'impulsion T_{ON}. Une série temporelle ou un ensemble de huit images 30 est générée à chaque impulsion lumineuse, pendant chaque temps d'exposition.

La séquence 20 comporte donc quatre paires d'impulsions (M = 4), numérotée i = 0, 1, 2, 3.

La première impulsion 21 de la première paire d'impulsion 21, 22 (i =0) de la séquence arrive à la fin du temps d'exposition 11, juste avant le temps de pause de la caméra T_{P}. La seconde impulsion 22 de la première paire d'impulsions 21, 22 de la séquence arrive au début du deuxième temps d'exposition 12. L'écart temporel de cette première paire correspond donc à l'écart minimal entre les deux impulsions τ₀ = τₘᵢₙ = T_{P} + T_{ON}.

La première impulsion 23 de la deuxième paire d'impulsions 23, 24 (i = 1) est décalée par rapport à la fin du troisième temps d'exposition 13, avant le temps de pause de la caméra T_{P}. La seconde impulsion 24 de la deuxième paire d'impulsions 23, 24 de la séquence est placée dans le quatrième temps d'exposition 14 de sorte que l'écart temporel entre les deux images consécutives soit égal à τ₁.

La première paire impulsion 25 de la troisième paire d'impulsions 25, 26 (i = 2) est placée dans le cinquième temps d'exposition 15. La seconde impulsion 26 de la paire d'impulsions 25, 26 de la séquence est placée dans le sixième temps d'exposition 16 de sorte que l'écart temporel entre les deux images consécutives soit égal à τ₂.

La première impulsion 27 de la dernière paire d'impulsion 27, 28 (i = 3) de la séquence est placée dans le temps d'exposition 17. La seconde impulsion 28 de la paire d'impulsions 27, 28 de la séquence est placée dans le huitième temps d'exposition 18 de sorte que l'écart temporel entre les deux images consécutives soit égal à τ₃. L'écart temporel de cette dernière paire peut correspondre à l'écart maximal entre les deux impulsions τₘₐₓ = T_{CAM} qui est le temps de prise d'image de la caméra.

Un premier ensemble d'images 30 formé de huit images 31, 32, 33, 34, 35, 36, 37, 38 est généré à partir de cette séquence d'impulsions.

La figure 8 illustre un autre exemple de séquence d'impulsions lumineuses constituée de 2M-1 paires d'impulsions. Le temps qui sépare deux impulsions d'une même paire est noté τᵢ, avec i allant de 0 à M-2, où M est un nombre entier.

L'écart temporel τ_{M-1} est obtenu ici en prenant la dernière image de la séquence et la première image de la séquence suivante. En d'autres termes, la seconde impulsion de la dernière paire d'impulsions d'une séquence qui est à la fin du temps d'exposition coïncide avec la première impulsion de la première paire d'impulsions de la séquence suivante. Ainsi, la séquence de la figure 8 a une image de moins par rapport à la séquence de la figure 6, ce qui est avantageux en termes de gain de temps de mesure.

Selon une variante du mode de réalisation de la figure 8, la séquence d'impulsions lumineuses est constitué de 2M-1 d'impulsions identiques à celles de la séquence de la figure 8, en permutant l'ordre des paires d'impulsions lumineuses portant les numéros 1, 2, ..., M-2.

La figure 9 illustre une séquence d'impulsions dans laquelle l'écart temporel de la première paire d'impulsions correspond à l'écart temporel minimal entre les deux impulsions τ₀ = τₘᵢₙ = T_{P} + T_{ON}. En d'autres termes, la première impulsion de la première paire est émise à la fin du temps d'exposition de la caméra et la seconde impulsion de la première paire est émise au début du temps d'exposition de la caméra. Ainsi, l'écart temporel minimum est égal à la somme du temps de pause de la caméra T_{P} et la durée de l'impulsion lumineuse T_{ON}. L'écart temporel de la (M-1)^{ieme} paire d'impulsions τ_{M-1} = τₘₐₓ est égal au temps de prise d'image de la caméra T_{CAM}.

La figure 10 illustre un exemple de réalisation dans lequel les impulsions qui portent un numéro paire notées Iᵢₘₚ₀, Iᵢₘₚ₂, I_{imp2(M-1)} sont émise toujours à la fin du temps d'exposition de l'image de la caméra.

La figure 11 illustre encore un autre exemple de réalisation dans lequel les impulsions qui portent un numéro paire notées Iᵢₘₚ₀, Iᵢₘₚ₂, I_{imp2(M-1)} sont émise toujours au début du temps d'exposition de l'image de la caméra.

La séquence d'impulsions définie par l'unité de définition de séquences d'impulsions 6 est ensuite envoyée à l'unité de synchronisation 5 pour synchroniser la source pulsée 4 avec la caméra 3 de sorte que les impulsions de la séquence soient émises selon le motif de la séquence défini.

Chaque impulsion lumineuse de la séquence permet de générer une image. Ainsi, un premier ensemble d'images est généré par la caméra, comme l'illustre la figure 6. Les images sont ensuite transmises à l'unité de construction d'images 7. Cet ensemble d'images est par exemple enregistré dans une mémoire de stockage de l'unité centrale de calcul 8 pour être traitées par l'unité de construction d'images 7.

L'unité de construction de paires d'images 7 est configurée pour construire à partir du premier ensemble d'images un second ensemble de paires d'images. Ce second ensemble de paires d'images est obtenu à partir de différentes combinaisons possibles de paires d'images à partir du premier ensemble d'images de sorte que les multiples écarts temporels τ différents entre deux images forment une seconde suite croissante S2. Cette seconde suite croissante S2 est de la même forme que la première suite désirée S1. Ainsi, si la première suite S1 est une suite croissante géométrique, la seconde suite S2 est également une suite géométrique.

L'unité de traitement d'images 7 est également configurée pour calculer la transformée de Fourier de la différence entre deux images pour chaque paire d'images en fonction de l'écart temporel pour obtenir la fonction de structure du système dynamique. Les informations sur la dynamique des phénomènes dynamiques de l'échantillon sont ensuite extraites à partir de cette fonction de structure.

Pour les valeurs désirées d'écarts temporels supérieures à T_{CAM} et inférieures à T, les paires d'images sont choisies dans la séquence T avec les écarts temporels se rapprochant le plus des écarts temporels de la suite désirée S1.

Pour les valeurs désirées d'écarts temporels supérieures à T_{CAM} et supérieures à T, on choisira une paire d'images, dont la première image de la paire précède la séquence T, et la seconde image de la paire suit la séquence, et dont l'écart temporel se rapproche le plus de l'écart temporel de la suite désirée.

En référence à la figure 12, un exemple de construction d'un ensemble de paires d'image est décrit ci-dessous, dans le cas où les valeurs désirées d'écarts temporels sont inférieures à T.

Le motif de la séquence d'impulsions lumineuses est défini avec *τ*₀ = Δ*τ* ≥ *τ*ₘᵢₙ et Δτ un sous-multiple de T_{CAM}, T_{CAM} = M Δτ. Dans ce mode de configuration, si la suite désirée est arithmétique, de raison Δτ, il est ainsi possible de toujours trouver une paire d'images dont l'écart temporel a une valeur exacte, égale à celle de la suite désirée, y compris pour la paire d'image ayant un indice supérieur à M. Le fait d'avoir les valeurs d'écarts temporels exactement équidistantes peut être utile pour le traitement des données. Par exemple, si le traitement des images génère une courbe, qui est une fonction de *τ*, alors on pourra simplement calculer la transformée de Fourier discrète des données dont la période d'échantillonnage est constante.

Ainsi, la figure 12 illustre le cas où T_{CAM} = 4 Δτ. On obtient pour i = 0, τ₀ = Δτ = T_{CAM}/4. Pour i= 1, τ₁ = 2Δτ = 1/2T_{CAM}. Pour i = 2, τ₂ = 3Δτ=3/4 T_{CAM}. Pour i = 3, τ₃ = 4Δτ=T_{CAM} = τ₁ + Δτ . Pour i supérieur à M, c'est-à-dire à 4, τ₃ = 5Δτ = τ₂ + Δτ. Les paires d'images sont ainsi construites de sorte que la suite est une suite arithmétique sont la relation *τ*_{*i*+1} *= ατᵢ* + Δτ*.* On note que pour τ₃, la première image de la paire est associée à la dernière impulsion de la séquence T et la deuxième image de la paire est associée à la première impulsion de la séquence T suivante.

En référence à la figure 13, un procédé d'imagerie 100 permettant de mesurer la dynamique d'un échantillon mettant en oeuvre le dispositif de la figure 1 est décrit ci-dessous.

Comme l'illustre la figure 1, l'échantillon 2 est placé dans un repère orthonormé (XYZ) et présente une surface 9 à analyser qui s'étend dans le plan (XZ). L'échantillon comprend des entités (P) en mouvement.

Au cours d'une étape E1 de définition de séquences d'impulsions (DEF_IMPULSIONS), l'unité de définition de séquences d'impulsions 6 définit le motif d'une séquence d'impulsions à générer par la source lumineuse pulsée 4. Le motif d'une séquence d'impulsions correspond à un arrangement possible d'impulsions lumineuses dont les écarts temporels lorsqu'une fois rangés forment une suite croissante. La durée du motif, et donc de la séquence T détermine le nombre d'écarts temporels possible. Les figures 6 à 12 illustrent quelques exemples de motifs de séquences d'impulsions lumineuses.

Cette séquence d'impulsions lumineuses est ensuite transmise par l'unité de synchronisation 5 sous forme d'un signal de commande à la caméra 3 et à la source lumineuse 4 de manière à synchroniser la séquence d'impulsions avec la séquence de temps d'exposition de la caméra selon l'arrangement de la séquence d'impulsions défini à l'étape E1.

Au cours d'une étape E2 de génération d'impulsions (GEN_IMPULSIONS), la séquence de paires d'impulsions est générée et répétée en boucle pendant toute la durée de prise d'images de la caméra, l'émission de chaque impulsion étant synchronisée avec le temps d'exposition de la caméra selon l'arrangement défini à l'étape E1.

Au cours d'une étape E3 d'acquisition d'images (ACQ_IMA), un premier ensemble d'images est acquis par la caméra 3. Cette étape E3 a eu lieu en même temps que l'étape E2. Ce premier ensemble d'images est transmis à l'unité de construction d'images 7 pour le calcul de la fonction de structure.

Au cours d'une étape E4 de construction d'un deuxième ensemble de paires d'images (CONST_IMA), ce second ensemble de paires d'images comprend un ensemble de paires d'images construit à partir du premier ensemble d'images de sorte que les multiples écarts temporels différents possibles entre deux images suivent une seconde suite croissante S2. Cette seconde suite croissante S2 est de la même forme que la première suite S1.

Au cours d'une étape E5 de calcul de la fonction de structure du système dynamique (CALC_FONCT_STRUC), l'unité de construction 7 calcule la différence entre deux images de chaque paire d'images séparées par un écart temporel. L'unité de construction 7 calcule ensuite la fonction de structure en prenant la transformée de Fourier de la différence entre deux images pour chaque paire d'images. Les informations sur la dynamique des entités en mouvement de l'échantillon sont ensuite extraites à partir de cette fonction de structure.

En référence à la figure 14, deux exemples de fonctions de structure sont représentés. Les courbes représentent en ordonnée la variance calculée entre deux images et en abscisse une échelle logarithmique pour l'écart temporel τ. La courbe référencée C1 représente la variance obtenue avec des impulsions lumineuses émises avec des écarts temporels définis selon une suite géométrique obtenue avec le dispositif de la présente divulgation. La courbe référencée C2 représente une fonction de structure obtenue avec un éclairage continu. Les résultats montrent que les résultats obtenus avec la solution de la présentent divulgation permettent d'améliorer non seulement le contraste entre les images avec une augmentation significative de la variance, mais également la résolution temporelle qui est dans cet exemple de l'ordre de 90 µs.

## Revendications

1. Dispositif (1) d'imagerie pour mesurer la dynamique d'un échantillon comprenant des entités en mouvement (2), le dispositif (1) comprenant :
- une caméra (3) apte à acquérir un premier ensemble d'images d'un échantillon comprenant des entités en mouvement (2), la caméra étant définie par un temps de prise d'image T_{CAM} comportant un temps d'exposition Tₑₓₚ et un temps de pause T_{P} ;
- une source lumineuse pulsée (4) apte à générer des impulsions lumineuses destinées à venir éclaire une zone de mesure de l'échantillon ;
- une unité de synchronisation "UNIT_SYN"(5) configurée pour synchroniser l'émission de chaque impulsions lumineuses avec le temps d'exposition de la caméra selon une séquence d'impulsions lumineuses;
- une unité de définition de séquences temporelles d'impulsions lumineuses "UNIT_IMP" (6) configurée pour définir la séquence d'impulsions lumineuses de sorte qu'une unique impulsion lumineuse soit émise pour chaque temps d'exposition de la caméra et que les impulsions une fois rangées par paire d'impulsions lumineuses consécutives génèrent une série d'écarts temporels entre les impulsions lumineuses de chaque paire allant d'un écart temporel supérieur ou égale à un écart temporel minimum τₘᵢₙ à un écart temporel inférieur ou égal à un écart temporel maximum τₘₐₓ selon une première suite croissante S1, où l'écart temporel minimum τₘᵢₙ est égal à la somme du temps de pause de la caméra T_{P} et de la durée de l'impulsion T_{ON} et où l'écart temporel maximum τₘₐₓ est égal au temps de prise d'image de la caméra T_{CAM};
- une unité de construction d'images "UNIT_IMA" (7) configurée pour construire un ensemble de paires d'images à partir des images générées par la caméra de sorte que les multiples écarts temporels entre deux images consécutives forment une seconde suite S2 ayant la même forme que la première suite S1, l'ensemble de paires d'images permettant la mesure de la dynamique de l'échantillon à l'aide d'une microscopie dynamique différentielle.

2. Dispositif selon la revendication 1, dans lequel la séquence d'impulsions lumineuses comprend M paires d'impulsions, où M est un nombre entier.

3. Dispositif selon l'une des revendication 1 à 2, dans lequel la séquence d'impulsions lumineuses comprend 2M-1 d'impulsions, où M est un nombre entier.

4. Dispositif selon l'une des revendications 1 à 3, dans lequel les impulsions paires de la séquence sont émises à la fin de chaque temps d'exposition de la caméra.

5. Dispositif selon l'une des revendications 1 à 4, dans lequel les impulsions paires de la séquence sont émises au début de chaque temps d'exposition de la caméra.

6. Dispositif selon l'une des revendications 1 à 5, dans lequel la première suite croissante est une suite géométrique, une suite arithmétique ou une suite arithmético-géométrique.

7. Dispositif selon l'une des revendications 1 à 6, dans lequel l'unité de constructions d'images "UNIT_IMA" (7) est configurée pour calculer une fonction de structure de l'échantillon à partir des différences déterminées pour chaque paire d'images dudit second ensemble d'images et extraire les informations représentatives de la dynamique des entités en mouvement.

8. Dispositif selon l'une des revendications 1 à 7, dans lequel la source lumineuse pulsée est une diode électroluminescente.

9. Dispositif selon l'une des revendications 1 à 8, dans lequel la source lumineuse pulsée est une source laser.

10. Procédé d'imagerie pour mesurer la dynamique d'un échantillon (2) comprenant des entités en mouvement, ledit procédé comprenant :
- fournir une caméra (3) apte à acquérir un premier ensemble d'images d'un échantillon comprenant des entités en mouvement (2), la caméra étant définie par un temps de prise d'image T_{CAM} comportant un temps d'exposition Tₑₓₚ et un temps de pause T_{P};
- fournir une source lumineuse pulsée (4) apte à générer des impulsions lumineuses destinées à venir éclaire une zone de mesure de l'échantillon ;
- définir une séquence d'impulsions lumineuses (E1) par une unité de définition de séquences temporelles d'impulsions "UNIT_IMP" (6), le motif de la séquence d'impulsions lumineuses étant défini de sorte qu'une unique impulsion lumineuse soit émise par temps d'exposition de la caméra et que les impulsions une fois rangées par paire d'impulsions lumineuses consécutives génèrent une série d'écarts temporels entre les impulsions lumineuses de chaque paire allant d'un écart temporel supérieur ou égale à un écart temporel minimum τₘᵢₙ à un écart temporel inférieur ou égal à un écart temporel maximum τₘₐₓ selon une première suite croissante S1, où l'écart temporel minimum τₘᵢₙ est égal à la somme du temps de pause de la caméra T_{P} et de la durée de l'impulsion T_{ON} et où l'écart temporel maximum τₘₐₓ est égal au temps de prise d'image de la caméra T_{CAM};
- illuminer (E2) une surface de l'échantillon par une série périodique de séquences d'impulsions émises par la source lumineuse pulsée, l'émission de chaque impulsion lumineuse étant synchronisée avec le temps d'exposition de la caméra par une unité de synchronisation "UNIT_SYN"(5) selon la séquence d'impulsions ;
- acquérir (E3) un premier ensemble de paires d'images par la caméra ;
- construire (E4) un second ensemble de paires d'images par une unité de construction d'images "UNIT_IMA" (7) à partir du premier ensemble d'images de sorte que les multiples d'écarts temporels entre deux images consécutives forment une seconde suite croissante S2 ayant la même forme que la première suite croissante S1, l'ensemble de paires d'images permettant la mesure de la dynamique de l'échantillon à l'aide d'une microscopie dynamique différentielle.

11. Procédé selon la revendication 10, dans lequel les impulsions paires de la séquence sont émises à la fin de chaque temps d'exposition de la caméra.

12. Procédé selon l'une des revendications 10 à 11, dans lequel les impulsions paires de la séquence sont émises au début du temps d'exposition de la caméra.

13. Procédé selon l'une des revendications 10 à 12, dans lequel la première suite est une suite croissante géométrique, arithmétique ou arithmético-géométrique.

14. Procédé selon l'une des revendications 10 à 13, comprenant en outre une étape :
- calculer (E5) une fonction de structure de l'échantillon dynamique à partir des différences pour chaque paire d'images dudit second ensemble d'images construit à l'étape (E4) et extraire les informations représentatives de la dynamique des entités en mouvement de l'échantillon.

## Patentansprüche

1. Bildgebungsvorrichtung (1) zur Messung der Dynamik einer Probe, welche Entitäten in Bewegung (2) umfasst, wobei die Vorrichtung (1) umfasst:
- eine Kamera (3), welche geeignet ist, einen ersten Satz von Bildern einer Probe, welche Entitäten in Bewegung (2) umfasst, aufzunehmen, wobei die Kamera durch eine Bildaufnahmezeit T_{CAM} definiert ist, welche eine Belichtungszeit Tₑₓₚ und eine Pausenzeit Tₚ umfasst;
- eine gepulste Lichtquelle (4), welche geeignet ist, Lichtimpulse zu erzeugen, welche dazu bestimmt sind, einen Messbereich der Probe zu beleuchten;
- eine Synchronisationseinheit "UNIT_SYN" (5), welche dazu eingerichtet ist, die Emission jedes Lichtimpulses mit der Belichtungszeit der Kamera gemäß einer Lichtimpulssequenz zu synchronisieren;
- eine Einheit zur Definition zeitlicher Lichtimpulssequenzen "UNIT_IMP" (6), welche dazu eingerichtet ist, die Lichtimpulssequenz so zu definieren, dass ein einziger Lichtimpuls für jede Belichtungszeit der Kamera emittiert wird und dass die Impulse, sobald sie paarweise als aufeinanderfolgende Lichtimpulspaare angeordnet sind, eine Reihe von zeitlichen Abständen zwischen den Lichtimpulsen jedes Paares erzeugen, welche von einem zeitlichen Abstand größer oder gleich einem minimalen zeitlichen Abstand τₘᵢₙ bis zu einem zeitlichen Abstand kleiner oder gleich einem maximalen zeitlichen Abstand τₘₐₓ gemäß einer ersten aufsteigenden Folge S1 reichen, wobei der minimale zeitliche Abstand τₘᵢₙ gleich der Summe aus der Pausenzeit der Kamera Tₚ und der Impulsdauer T_{ON} ist und wobei der maximale zeitliche Abstand τₘₐₓ gleich der Bildaufnahmezeit der Kamera T_{CAM} ist;
- eine Bildkonstruktionseinheit "UNIT_IMA" (7), welche dazu eingerichtet ist, einen Satz von Bildpaaren aus den von der Kamera erzeugten Bildern so zu konstruieren, dass die mehrfachen zeitlichen Abstände zwischen zwei aufeinanderfolgenden Bildern eine zweite Folge S2 bilden, welche dieselbe Form wie die erste Folge S1 aufweist, wobei der Satz von Bildpaaren die Messung der Dynamik der Probe mittels differentieller dynamischer Mikroskopie ermöglicht.

2. Vorrichtung nach Anspruch 1, wobei die Lichtimpulssequenz M Impulspaare umfasst, wobei M eine ganze Zahl ist.

3. Vorrichtung nach einem der Ansprüche 1 bis 2, wobei die Lichtimpulssequenz 2M-1 Impulse umfasst, wobei M eine ganze Zahl ist.

4. Vorrichtung nach einem der Ansprüche 1 bis 3, wobei die geradzahligen Impulse der Sequenz am Ende jeder Belichtungszeit der Kamera emittiert werden.

5. Vorrichtung nach einem der Ansprüche 1 bis 4, wobei die geradzahligen Impulse der Sequenz zu Beginn jeder Belichtungszeit der Kamera emittiert werden.

6. Vorrichtung nach einem der Ansprüche 1 bis 5, wobei die erste aufsteigende Folge eine geometrische Folge, eine arithmetische Folge oder eine arithmetisch-geometrische Folge ist.

7. Vorrichtung nach einem der Ansprüche 1 bis 6, wobei die Bildkonstruktionseinheit "UNIT_IMA" (7) dazu eingerichtet ist, eine Strukturfunktion der Probe aus den für jedes Bildpaar des zweiten Bildsatzes bestimmten Differenzen zu berechnen und die für die Dynamik der Entitäten in Bewegung repräsentativen Informationen zu extrahieren.

8. Vorrichtung nach einem der Ansprüche 1 bis 7, wobei die gepulste Lichtquelle eine Leuchtdiode ist.

9. Vorrichtung nach einem der Ansprüche 1 bis 8, wobei die gepulste Lichtquelle eine Laserquelle ist.

10. Bildgebungsverfahren zur Messung der Dynamik einer Probe (2), welche Entitäten in Bewegung umfasst, wobei das Verfahren umfasst:
- Bereitstellen einer Kamera (3), welche geeignet ist, einen ersten Satz von Bildern einer Probe, welche Entitäten in Bewegung (2) umfasst, aufzunehmen, wobei die Kamera durch eine Bildaufnahmezeit T_{CAM} definiert ist, welche eine Belichtungszeit Tₑₓₚ und eine Pausenzeit Tₚ umfasst;
- Bereitstellen einer gepulsten Lichtquelle (4), welche geeignet ist, Lichtimpulse zu erzeugen, welche dazu bestimmt sind, einen Messbereich der Probe zu beleuchten;
- Definieren einer Lichtimpulssequenz (E1) durch eine Einheit zur Definition zeitlicher Impulssequenzen "UNIT_IMP" (6), wobei das Muster der Lichtimpulssequenz so definiert ist, dass ein einziger Lichtimpuls pro Belichtungszeit der Kamera emittiert wird und dass die Impulse, sobald sie paarweise als aufeinanderfolgende Lichtimpulspaare angeordnet sind, eine Reihe von zeitlichen Abständen zwischen den Lichtimpulsen jedes Paares erzeugen, welche von einem zeitlichen Abstand größer oder gleich einem minimalen zeitlichen Abstand τₘᵢₙ bis zu einem zeitlichen Abstand kleiner oder gleich einem maximalen zeitlichen Abstand τₘₐₓ gemäß einer ersten aufsteigenden Folge S1 reichen, wobei der minimale zeitliche Abstand τₘᵢₙ gleich der Summe aus der Pausenzeit der Kamera Tₚ und der Impulsdauer T_{ON} ist und wobei der maximale zeitliche Abstand τₘₐₓ gleich der Bildaufnahmezeit der Kamera T_{CAM} ist;
- Beleuchten (E2) einer Oberfläche der Probe durch eine periodische Reihe von Impulssequenzen, welche von der gepulsten Lichtquelle emittiert werden, wobei die Emission jedes Lichtimpulses mit der Belichtungszeit der Kamera durch eine Synchronisationseinheit "UNIT_SYN" (5) gemäß der Impulssequenz synchronisiert wird;
- Aufnehmen (E3) eines ersten Satzes von Bildpaaren durch die Kamera;
- Konstruieren (E4) eines zweiten Satzes von Bildpaaren durch eine Bildkonstruktionseinheit "UNIT_IMA" (7) aus dem ersten Bildsatz, so dass die mehrfachen zeitlichen Abstände zwischen zwei aufeinanderfolgenden Bildern eine zweite aufsteigende Folge S2 bilden, welche dieselbe Form wie die erste aufsteigende Folge S1 aufweist, wobei der Satz von Bildpaaren die Messung der Dynamik der Probe mittels differentieller dynamischer Mikroskopie ermöglicht.

11. Verfahren nach Anspruch 10, wobei die geradzahligen Impulse der Sequenz am Ende jeder Belichtungszeit der Kamera emittiert werden.

12. Verfahren nach einem der Ansprüche 10 bis 11, wobei die geradzahligen Impulse der Sequenz zu Beginn der Belichtungszeit der Kamera emittiert werden.

13. Verfahren nach einem der Ansprüche 10 bis 12, wobei die erste Folge eine aufsteigende geometrische, arithmetische oder arithmetisch-geometrische Folge ist.

14. Verfahren nach einem der Ansprüche 10 bis 13, ferner umfassend einen Schritt:
- Berechnen (E5) einer Strukturfunktion der dynamischen Probe aus den Differenzen für jedes Bildpaar des in Schritt (E4) konstruierten zweiten Bildsatzes und Extrahieren der für die Dynamik der Entitäten in Bewegung der Probe repräsentativen Informationen

## Claims

1. An imaging device (1) for measuring the dynamics of a sample comprising moving entities (2), the device (1) comprising:
- a camera (3) capable of acquiring a first set of images of a sample comprising moving entities (2), the camera being defined by an image capture time T_{CAM} comprising an exposure time Tₑₓₚ and a dead time T_{P};
- a pulsed light source (4) capable of generating light pulses intended to illuminate a measurement zone of the sample;
- a synchronization unit "UNIT_SYN" (5) configured to synchronize the emission of each light pulse with the exposure time of the camera according to a sequence of light pulses;
- a unit "UNIT_IMP" (6) for defining time sequences of light pulses configured to define the sequence of light pulses such that a single light pulse is emitted for each exposure time of the camera and such that the pulses, once stored per pair of consecutive light pulses, generate a series of time differences between the light pulses of each pair ranging from a time difference that is greater than or equal to a minimum time difference τₘᵢₙ to a time difference that is less than or equal to a maximum time difference τₘₐₓ according to a first increasing sequence S1, where the minimum time difference τₘᵢₙ is equal to the sum of the dead time T_{P} of the camera and of the duration of the pulse T_{ON} and where the maximum time difference τₘₐₓ is equal to the image capture time T_{CAM} of the camera;
- an image construction unit "UNIT_IMA" (7) configured to construct a set of pairs of images from the images generated by the camera such that the multiple time differences between two consecutive images form a second sequence S2 assuming the same shape as the first sequence S1, with the set of pairs of images allowing the dynamics of the sample to be measured using differential dynamic microscopy.

2. The device as claimed in claim 1, wherein the sequence of light pulses comprises M pairs of pulses, where M is an integer.

3. The device as claimed in any of claims 1 to 2, wherein the sequence of light pulses comprises 2M-1 pulses, where M is an integer.

4. The device as claimed in any of claims 1 to 3, wherein the even pulses of the sequence are emitted at the end of each exposure time of the camera.

5. The device as claimed in any of claims 1 to 4, wherein the even pulses of the sequence are emitted at the beginning of each exposure time of the camera.

6. The device as claimed in any of claims 1 to 5, wherein the first increasing sequence is a geometric sequence, an arithmetic sequence or an arithmetico-geometric sequence.

7. The device as claimed in any of claims 1 to 6, wherein the image construction unit "UNIT_IMA" (7) is configured to compute a structure function of the sample from the differences determined for each pair of images of said second set of images and to extract the information representing the dynamics of the moving entities.

8. The device as claimed in any of claims 1 to 7, wherein the pulsed light source is a light emitting diode.

9. The device as claimed in any of claims 1 to 8, wherein the pulsed light source is a laser source.

10. An imaging method for measuring the dynamics of a sample (2) comprising moving entities, said method comprising:
- providing a camera (3) capable of acquiring a first set of images of a sample comprising moving entities (2), the camera being defined by an image capture time T_{CAM} comprising an exposure time Tₑₓₚ and a dead time T_{P};
- providing a pulsed light source (4) capable of generating light pulses intended to illuminate a measurement zone of the sample;
- defining (E1) a sequence of light pulses using a unit "UNIT_IMP" (6) for defining time sequences of pulses, with the pattern of the sequence of light pulses being defined such that a single light pulse is emitted per exposure time of the camera and such that the pulses, once stored per pair of consecutive light pulses, generate a series of time differences between the light pulses of each pair ranging from a time difference that is greater than or equal to a minimum time difference τₘᵢₙ to a time difference that is less than or equal to a maximum time difference τₘₐₓ according to a first increasing sequence S1, where the minimum time difference τₘᵢₙ is equal to the sum of the dead time T_{P} of the camera and of the duration of the pulse T_{ON} and where the maximum time difference τₘₐₓ is equal to the image capture time T_{CAM} of the camera;
- illuminating (E2) a surface of the sample via a periodic series of sequences of pulses emitted by the pulsed light source, with the emission of each light pulse being synchronized with the exposure time of the camera by a synchronization unit "UNIT_SYN"(5) according to the sequence of pulses;
- acquiring (E3) a first set of pairs of images via the camera;
- constructing (E4) a second set of pairs of images via an image construction unit "UNIT_IMA" (7) from the first set of images such that the multiple time differences between two consecutive images form a second increasing sequence S2 assuming the same shape as the first increasing sequence S1, with the set of pairs of images allowing the dynamics of the sample to be measured using differential dynamic microscopy.

11. The method as claimed in claim 10, wherein the even pulses of the sequence are emitted at the end of each exposure time of the camera.

12. The method as claimed in any of claims 10 to 11, wherein the even pulses of the sequence are emitted at the beginning of the exposure time of the camera.

13. The method as claimed in any of claims 10 to 12, wherein the first sequence is an increasing geometric, arithmetic or arithmetico-geometric sequence.

14. The method as claime>d in any of claims 10 to 13, further comprising a step of:
- computing (E5) a structure function of the dynamic sample from the differences for each pair of images of said second set of images constructed in step (E4) and extracting the information representing the dynamics of the moving entities of the sample.
